Europäisches Patentamt

European Patent Office

Office européen des brevets

Veröffentlichungsnummer: **0 288 827**

**A2**

# EUROPÄISCHE PATENTANMELDUNG

Anmeldenummer: 88105949.7

Int. Cl.⁴ **G01L 9/06 , G01L 19/06**

Anmeldetag: 14.04.88

Priorität: 18.04.87 DE 3713236

Veröffentlichungstag der Anmeldung:
02.11.88 Patentblatt 88/44

Benannte Vertragsstaaten:
AT BE CH DE FR GB IT LI LU NL

Anmelder: PARKER-ERMETO GMBH
Am Metallwerk 9
D-4800 Bielefeld 12(DE)

Erfinder: Schulze, Dieter
Johann-Strauss-Weg 9
D-4837 Verl 1(DE)

Vertreter: Linser, Heinz et al
Patentanwälte Heinz Linser Dipl. Ing.
Eckhardt Eyer Robert-Bosch-Strasse 12a
Postfach 10 22 10
D-6072 Dreieich(DE)

Vorrichtung zur Messung von Drücken.

Die Erfindung betrifft eine Vorrichtung zur Messung von Drücken in einem hydraulischen oder pneumatischen System, welche vorzugsweise eine piezoresistive Druckmeßzelle aufweist, die sich in einem mit einem Trennfluid gefüllten und mittels einer Membrane vom zu messenden Medium getrennten Druckraum innerhalb eines Druckgehäuses befindet. Druckeingangsseitig vor der im Druckgehäuse 6 befindlichen Trennmembrane 2 ist ein dem Durchmesser der Trennmembrane 2 angepaßtes, permeables, scheibenförmig ausgebildetes Druckübertragungselement 1 angeordnet, welches mit dem Druckgehäuse 6 fest verbunden ist, für fluidische Druckmedien in beiden Richtungen durchlässig ausgebildet ist und gegenüber den Druckmedien einen der Permeabilität des Druckübertragungselements entsprechenden Strömungswiderstand aufweist. Das Druckdämpfungselement 1 besteht aus einem beidseitig permeablen, mikroporösen Sintermetall. Es kann jedoch auch aus einem beitseitig permeablen, mikroporösen NE-Werkstoff oder einem beidseitig permeablen, mikroporösen keramischen Werkstoff bestehen. Die Permeabilität des Druckdämpfungselements 1 läßt sich den gewünschten Dämpfungsgrößen anpaßen.

EP 0 288 827 A2

## Vorrichtung zur Messung von Drücken.

Die Erfindung betrifft eine Vorrichtung zur Messung von Drücken in einem hydraulischen oder pneumatischen System, welche vorzugsweise eine piezoresistive Druckmeßzelle aufweist, die sich in einem mit einem Trennfluid gefüllten und mittels einer Membrane vom zu messenden Medium getrennten Druckraum innerhalb eines Druckgehäuses befindet.

Die Verwendung derartiger und an sich bekannter Druckaufnehmer in hydraulischen oder pneumatischen Maschinen und Anlagen ist nicht nur zu Meß-, Steuer-und Regelzwecken vorteilhaft, sondern findet auch für eine zuverlässige Diagnose bei der Inbetriebnahme und Wartung solcher Anlagen statt. Weite Verbreitung haben Druckmeßzellen gefunden, in denen zur Druckaufnahme piezoresistive Halbleiterelemente eingesetzt werden. Zum Schutz gegen Umwelteinflüsse befinden sich diese Elemente in einem Druckraum, der mit einem Trennfluid gefüllt und durch eine Membrane, die eine 1:1 Druckübersetzung ermöglicht, an das zu messende Medium angekoppelt ist.

In hydraulischen Systemen können Druckspitzen auftreten, die insbesondere in Verbindung mit eingeschlossenen Luftblasen eine zerstörende Wirkung auf die piezoresistiven Druckelemente und auf die teilweise sehr dünn ausgeführten Trennmembranen ausüben. Um keinen Fehler bei der Druckmessung zu verursachen, ist es nämlich erforderlich, die Trennmembranen sehr dünn auszugestalten. Aufgrund der kinetischen Energie, die das strömende Medium innehat, verteilt sich der Druck ungleichmäßig über der Membranfläche. Das hat zur Folge, daß die Membrane eine bleibende Verformung erhält, wodurch ihre Funktion nachteilig beeinträchtigt wird.

Eine weitere Gefährdung besteht bei der Handhabung der Druckaufnehmer während der Montage. Hier kann durch Berühren der Trennmembrane ebenfalls leicht eine Beschädigung des Meßgerätes auftreten.

Bekannte Ausführungen von Druckmeßsensoren verfügen entweder über keinen Schutz des Sensors bzw. der Membrane oder über fest angebaute, mit Schlitzen oder Löchern versehene Abdeckungen, wodurch das auf die Membrane zuströmende Medium abgelenkt werden soll. Ein derartig starrer Membranschutz begünstigt jedoch Lufteinschlüsse in hydraulischen Systemen. Die dämpfende Wirkung gegenüber hohen Druckspitzen reicht dabei nicht aus, um den Sensor oder die Membrane vor einer Deformation oder sogar Zerstörung zu schützen.

Die empfindlichen Sensoren haben ferner die Eigenschaft, aufgrund ihrer geringen Masse auf äußere Druckbelastungen sehr schnell zu reagieren. Dies führt dazu, daß bei einer Drucküberlastung innerhalb von Sekunden-Bruchteilen eine Zerstörung des piezo-resistiven Kristalls möglich ist. In einem hydraulischen System lassen sich jedoch kurzzeitige Drucküberlastspitzen nicht immer vermeiden.

Der Erfindung liegt daher die Aufgabe zugrunde, die Robustheit einer piezoresistiven Meßzelle der eingangs aufgeführten Art zu erhöhen und zum Schutz des Sensors und gegebenenfalls der Trennmembrane gegen Drucküberlastungen entsprechende Maßnahmen vorzuschlagen.

Die Lösung dieser Aufgabe besteht darin, daß druckeingangsseitig vor der im Druckgehäuse befindlichen Trennmembrane ein dem Durchmesser der Trennmembrane angepaßtes, permeables, - scheibenförmig ausgebildetes Druckübertragungselement angeordnet ist, welches mit dem Druckgehäuse fest verbunden ist, für fluidische Druckmedien in beiden Richtungen durchlässig ausgebildet ist und gegenüber den Druckmedien einen der Permeabilität des Druckübertragungselements entsprechenden Strömungswiderstand aufweist, der um so mehr wächst, je stärker die Strömung ist.

Das Druckdämpfungselement nach der Erfindung besteht in einer vorteilhaften Ausführungsform aus einem beidseitig permeablen, mikroporösen Sintermetall.

Das Druckdämpfungselement kann in vorteilhafter Weise auch aus einem beitseitig permeablen, mikroporösen NE-Werkstoff oder auch aus einem beidseitig permeablen, mikroporösen keramischen Werkstoff bestehen.

Setzt man voraus, daß das zu messende Medium eine Flüssigkeit mit einer gewissen Kompressibilität (z.B. Hydrauliköl) ist, und setzt man ferner voraus, daß der eingeschlossene Raum zwischen dem Druckübertragungselement und der Membrane nach der Montage zunächst mit Luft gefüllt ist, so strömt bei dem ersten auftretenden Druckstoß die Flüssigkeit durch das beidseitig permeable Druckübertragungselement in den Raum vor der Membrane ein. Durch die Porösität und Permeabilität des Elementes wird diese Strömung stark gedämpft, so daß die Flüssigkeit nur mit geringer, kinetischer Energie auf die empfindliche Trennmembrane auftrifft.

Wird der Sensor in seiner Lage so angeordnet, daß der Meßanschluß nach oben und die Meßzelle nach unten zeigt, so entweicht bei einer nachfolgenden Druckentlastung nicht die Flüssigkeit, sondern die Luft aus dem eingeschlossenen Raum.

Bereits nach wenigen Druckzyklen ist der Raum zwischen dem Druckübertragungselement und der Membrane vollständig entlüftet, so daß die Strömung durch das Druckübertragungselement und damit seine Dämpfungswirkung auf einen Restbetrag zurückgeht, der durch das geringe, eingeschlossene Flüssigkeitsvolumen und die Kompressibilität der eingeschlossenen Flüssigkeit bestimmt wird. Dieser Restbetrag ist bei richtiger Dimensionierung der Permeabilität und der geometrischen Größen groß genug, um die piezoresistive Meßzelle ausreichend gegen unerwartet auftretende Druckspitzen zu schützen und klein genug, um die Meßaufgabe ohne merkliche Verzögerung und Verfälschung der zu messenden Druckwerte zu erfüllen. Gleichzeitig werden lokale Flüssigkeitsströmungen, wie sie z.B. durch Druckstöße hervorgerufen werden können, in vorteilhafter Weise von der Trennmembrane ferngehalten.

Die Anordnung nach der Erfindung eignet sich ebenfalls auch zur Druckmessung in Gasen.

Die Kompressibilität des Mediums ist hierbei zwar höher, dafür ist aber seine Viskosität geringer. Die Schutzwirkung des Druckübertragungselements erstreckt sich im wesentlichen auf die Trennmembrane.

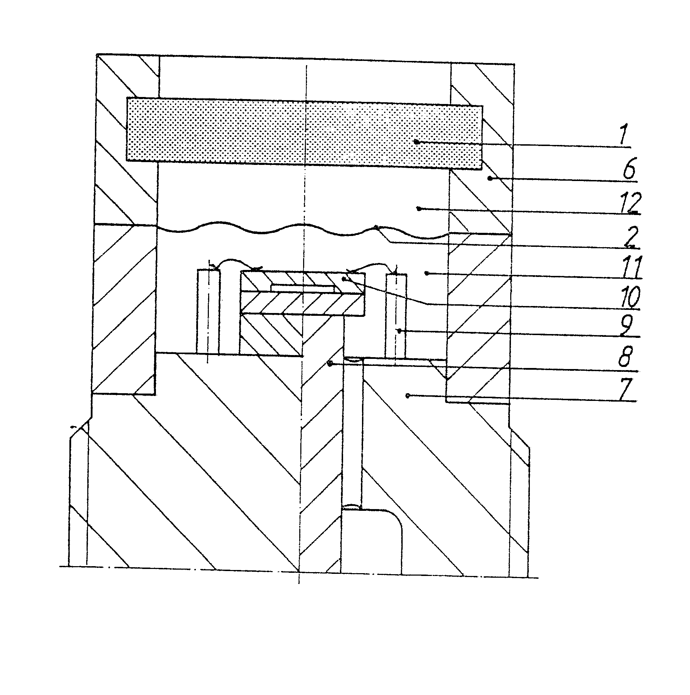

Die Erfindung wird anhand der Zeichnung näher erläutert. Hierbei ist der Einbauraum des Drucksensors im Querschnitt in zwei verschiedenen Ausführungsformen, getrennt durch eine senkrechte Mittellinie, dargestellt.

Der Gehäusekörper 7 dient zur Aufnahme des Sensorelements 10 mit seinem Montagepfosten 8, auf den es befestigt ist, sowie den elektrischen Durchführungen 9. Der innere, mit einem Trennfluid gefüllte Druckraum 11 ist mit einer Trennmembrane 2, welche beispielsweise aus Stahl besteht, von dem zu messenden Medium getrennt. Vor der Trennmembrane 2 ist ein scheibenförmiges Druckübertragungselement 1 angeordnet, welches mit dem Gehäuse fest verbunden ist, so daß sich zwischen dem Druckübertragungselement 1 und der Trennmembrane 2 der eingeschlossene Raum 12 ergibt.

Das Druckübertragungselement ist für flüssige und gasförmige Stoffe nach beiden Seiten durch seine Porosität durchlässig, wobei sich beim Auftreten einer Strömung ein Strömungswiderstand ausbildet. Ein solcher Fall liegt beispielsweise beim Anschluß der Meßvorrichtung an ein fluidisches System vor. Die Entlüftung des Raumes 12 erfolgt bei einem zu messenden flüssigen Medium durch mehrfache Drückänderungen, so daß das flüssige Medium das im Raum 12 befindliche Gas verdrängt. Das zu messende Medium strömt dabei langsam durch das Druckübertragungselement 1 und füllt dabei den Raum 12 vollständig. Das Druckübertragungselement nach der Erfindung übt daher bereits beim Anschluß der Meßvorrichtung an ein hydraulisches System eine vorteilhafte Schutzwirkung aus.

Während des normalen Meßvorganges erfolgt von dem Raum 12 die weitere Drucküertragung über die Trennmembrane 2 und das Trennfluid 11 auf den Druckmeßsensor 10.

Im fluidischen System auftretende Druckspitzen, deren Messung nicht berabsichtigt ist, deren Auftreten aber auch nicht verhindert werden kann, werden von dem Druckübertragungselement 1 so weit gedämpft, daß sie für die Trennmembrane 2 keine Gefahr mehr bedeuten.

Die Größe der beabsichtigten Dämpfung läßt sich verändern, indem die Geometrie, beispielsweise die Dicke des Druckübertragungselements oder seine nach beiden Seiten wirksame Permeabilität und seine Porosität durch eine unterschiedliche Herstellung entprechend angepaßt wird.

Auch bei der Handhabung des Sensors im nichtangeschlossenen Zustand ist das Druckübertragungselement nach der Erfindung positiv wirksam, da die Trennmembrane 2 vollständig gegen Berührung geschützt ist.

## Ansprüche

1. Vorrichtung zur Messung von Drücken in einem hydraulischen oder pneumatischen System, welche vorzugsweise eine piezoresistive Druckmeßzelle aufweist, die sich in einem mit einem Trennfluid gefüllten und mittels einer Trennmembrane vom zu messenden Medium getrennten Druckraum innerhalb eines Druckgehäuses befindet, dadurch gekennzeichnet, daß druckeingangsseitig vor der im Druckgehäuse (6) befindlichen Trennmembrane (2) ein dem Durchmesser der Trennmembrane (2) angepaßtes, permeables, scheibenförmig ausgebildetes Druckübertragungselement (1) angeordnet ist, welches mit dem Druckgehäuse (6) fest verbunden ist, für fluidische Druckmedien in beiden Richtungen durchlässig ausgebildet ist und gegenüber den Druckmedien einen der Permeabilität des Druckübertragungselements entsprechenden Strömungswiderstand aufweist.

2. Vorrichtung nach Anspruch 1. dadurch gekennzeichnet, daß das Druckdämpfungselement (1) aus einem beidseitig permeablen, mikroporösen Sintermetall besteht.

3. Vorrichtung nach Anspruch 1, dadurch gekennzeichnet, daß das Druckdämpfungselement (1) aus einem beitseitig permeablen, mikroporösen NE-Werkstoff besteht.

4. Vorrichtung nach Anspruch 1. dadurch gekennzeichnet, daß das Druckdämpfungselement (1) aus einem beidseitig permeablen, mikroporösen keramischen Werkstoff besteht.

5. Vorrichtung nach Anspruch 1 oder einem der voranstehenden Ansprüche 2 bis 4, dadurch gekennzeichnet, daß die Permeabilität des Druckdämpfungselements (1) den gewünschten Dämpfungsgrößen anpaßbar ausgebildet ist.

1

6

12

2

11

10

9

8

7